# EUROPEAN PATENT APPLICATION

(11) **EP 2 048 830 A1**
(43) Date of publication of application: **15.04.2009**
(21) Application number: 07291238.9
(22) Date of filing: 10.10.2007
(51) Int. Cl.: H04L 12/56

(54) **Method for routing in optical communication networks**

(71) Applicant: Alcatel Lucent, 75008 Paris (FR)
(72) Inventor: Morea, Annelisa, 75014 Paris (FR); Brogard, Nicolas, 92120 Montrouge (FR)
(74) Representative: Croonenbroek, Thomas Jakob

(57) **Abstract**

The present invention relates to a method for routing an optical signal originated from a source network node in an optical communication network from a current network node to a subsequent network node in order to reach a destination network node comprising, selecting at least one potential subsequent neighbor network node and corresponding path connected to the current network node (25), determining available wavelengths along said path (27), determining, for available wavelengths along said path, parameter values representative of the transportation cost between the current network node and the selected potential subsequent neighbor network node, adding said selected potential subsequent neighbor network node, corresponding path and associated parameter values representative of the transportation cost between the current network node and the selected potential subsequent neighbor network node to a list of explored potential paths (31). It further comprises checking the physical feasibility of said path and in case of physical feasibility (29) and, selecting the potential subsequent neighbor network node with the lowest parameter value representative of the transportation cost between the source network node and the selected potential subsequent neighbor network node as the subsequent current node.

## Description

### BACKGROUND OF THE INVENTION

The present invention relates to the field of routing in optical communication networks.

Optical communication networks mainly consist of nodes connected together via optical links. A node is in general connected to one or several other nodes and several paths usually exist to go from one node to another. It is therefore necessary to provide a routing method to select the optimal path to the destination node. Moreover, recent progress in optical technology have allowed the use of wavelength multiplexing in order to increase networks capacity. This kind of network is also called Wavelength Division Multiplexing (WDM) network and consists in carrying several signal components on different optical wavelengths. WDM networks are equipped with Optical-Electronic-Optical (OEO) devices able to perform regeneration and conversion of the signal. Regeneration is needed when signal degradation of the signal due to physical impairments reaches a determined threshold. Conversion is needed when the wavelength carrying a signal component is not available in the subsequent link, the signal component has then to be converted to be carried on another available optical wavelength. Nevertheless, conversion and regeneration generate supplemental costs and the regeneration/conversion capacity of the nodes is, in general, limited.

It is an object of the present invention to provide a method for routing an optical signal in an optical network optimizing transportation costs while ensuring a sufficient signal quality at reception.

### SUMMARY OF THE INVENTION

The routing optimization is achieved by a method for routing an optical signal originated from a source network node in an optical communication network from a current network node to a subsequent network node in order to reach a destination network node comprising selecting at least one potential subsequent neighbor network node and corresponding path connected to the current network node, determining available wavelengths along said path, determining, for available wavelengths along said path, parameter values representative of the transportation cost between the current network node and the selected potential subsequent neighbor network node, adding said selected potential subsequent neighbor network node, corresponding path and associated parameter values representative of the transportation cost between the current network node and the selected potential subsequent neighbor network node to a list of explored potential paths. It further comprises checking the physical feasibility of said path and in case of physical feasibility (29), selecting the potential subsequent neighbor network node with the lowest parameter value representative of the transportation cost between the source network node and the selected potential subsequent neighbor network node as the subsequent current node.

Preferably, the method comprises steps of determining an estimated parameter value representative of the transportation cost from said potential subsequent neighbor network node to the destination node, estimating a total parameter value representative of a total transportation cost, from the source node to the destination node, by adding on one hand the parameter value representative of the transportation cost between the source network node and the selected potential subsequent neighbor network node and on the other hand the estimated parameter value representative of the transportation cost from said potential subsequent neighbor network node to the destination node and, selecting the potential subsequent neighbor network node with the lowest total parameter value as the subsequent current node.

Advantageously, checking the physical feasibility of said paths comprises evaluation of a QoT function.

Furthermore, the method comprises a step of memorizing in the list, for explored potential paths, a path definition comprising the different nodes along the path, associated parameter values representative of the transportation cost of the path, associated estimated parameter values representative of the transportation cost from said potential subsequent neighbor network node to the destination node, associated total estimated parameter value representative of the total transportation cost, from the source node to the destination node and, a value representative of the QoT function.

Preferably, a flag value of the parameter values representative of the transportation cost between the current network node and the selected potential subsequent neighbor network node is added to a path in case of non physical feasibility, the flag value being preferentially an infinite value.

Alternatively, selecting at least one potential subsequent neighbor network node and corresponding path connected to the current network node further comprises paths incorporating regeneration of the signal.

Advantageously, selecting at least one potential subsequent neighbor network node and corresponding path connected to the current network node further comprises paths incorporating wavelength conversion of the signal.

Preferably, the estimated parameter value representative of the transportation cost from said potential subsequent neighbor network node to the destination node is the cost of the shortest path from said potential subsequent neighbor network node to the destination node without signal regeneration and without wavelength conversion.

Alternatively, it is provided a method for routing an optical signal originated from a source network node in an optical communication network in order to reach a destination network node. The method comprises receiving a request to send an optical signal from a source network node to a destination network node, adding the source network node to the list of explored potential paths and iterating the method in accordance with any of the previous claims until destination node is reached or until no feasible path exist.

Preferably, the method further comprises routing the optical signal through the selected path corresponding to the lowest total parameter value representative of total transportation cost to the destination node.

### BRIEF DESCRIPTION OF THE DRAWINGS

FIG.**1** is a block diagram of an algorithm according to the present invention;
FIG.2 is a diagram of an optical network;
FIG.3 to 10 are diagrams of the open list at different steps of the method for routing according to the present invention;

### DETAILED DESCRIPTION OF THE INVENTION

As used herein, the term "QoT" stands for quality of transmission and the QoT function gives an estimation of the quality of the transmitted signal.

As used herein, the term "regen node" refers to nodes equipped with Optical-Electronic-Optical (OEO) devices and where either regeneration of the signal to ensure the quality of the signal or conversion to another wavelength to ensure transmission continuity of the signal can be performed.

To better consider the propagation of optical signals of a given wavelength in the network, the present invention considers well-known layer graph modeling of an optical network. A layer graph is a directed graph obtained by replicating N times a simple layer associated with a network, where N is equal to the number of wavelengths per fiber in the network. Thus, the propagation of the signal along a single layer corresponds to a signal carried by only one wavelength so that no wavelength conversion is needed. Within the network, a wavelength conversion is possible by using OEO devices at the nodes. Such conversion corresponds to a jump from one layer to another one. To take into account any OEO operations, an additional layer corresponding to OEO devices is added to the graph.

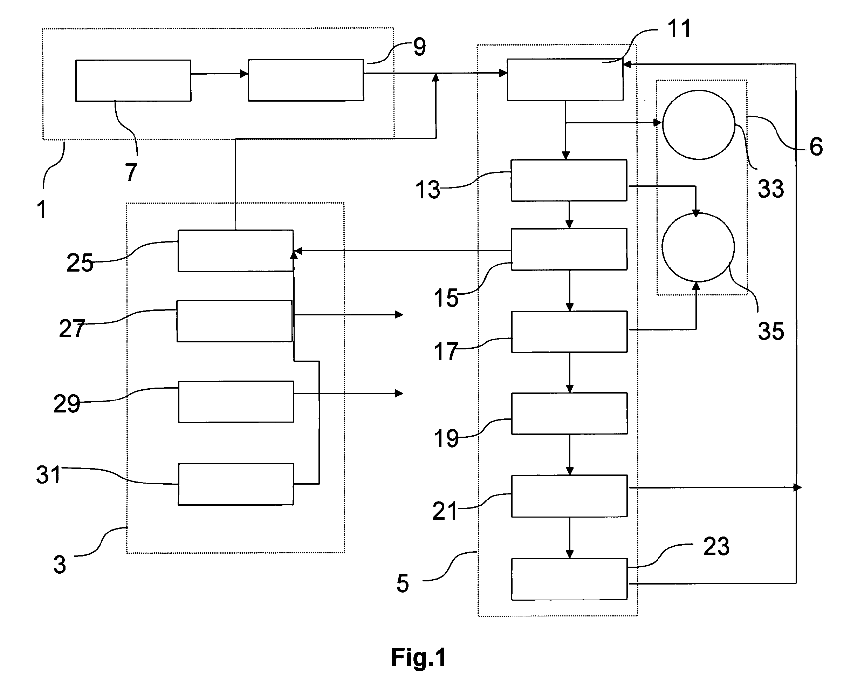

FIG.1 illustrates, in block diagram form, an algorithm for routing in a Wavelength Division Multiplexing (WDM) network according to the present invention. The algorithm can be divided in four parts:

### - an initialization routine 1:

The algorithm starts with the request to send a signal from a source network node to a destination network node (step 7). An open list is cleared and the source network node is then added to the open list (step 9).
The open list is a working tool to find an optimized path through the network taking into account the constraints of availability of wavelengths, regenerations and/or conversions and the quality of the optical signal. It contains the explored paths with following associated status information:
- name of the current network node reached by the memorized path, at initialization step, the current network node is equal to the source network node,
- the wavelength of the optical signal at the current network node,
- a value representing an estimated transportation cost of the path to reach the current network node from source network node,
- a value representing an estimated transportation cost to reach destination node from current network node without conversion or regeneration,
- a value representing a total estimated cost from source network node to destination network node using this path, this value being the sum of the value representing an estimated transportation cost of the path to reach the current network node from source network node and a value representing an estimated transportation cost to reach destination network node from current network node without conversion or regeneration,
- a QoT function value.
The open list is sorted or reorganized in order for the path with the lowest total estimated cost and an admissible QoT function value to be in the first position.

### - a selection routine 5:

The path having the lowest total estimated cost and placed at the first position of the open list is extracted and the corresponding node is the current network node (step 11). If the open list is empty, the algorithm goes to step 33 which is a termination step value when no feasible path is detected. Non-feasibility means that no physical feasible path can be found. For example, if the signal quality at the current node is not admissible and no regeneration can be achieved or if no wavelength is available on the path.
The current network node is compared to the destination network node (step 13). If this current network node matches with the destination network node, the algorithm goes to step 35 which is also a termination node in the case a feasible path has been detected. If the current network node is not the destination network node, the algorithm checks if the current network node is a regen node (step 15). If not it means that the signal can still propagate on the same layer and the algorithm goes to step 25. If the current network node is a regen node, the algorithm checks if the current network node has already been set as "checked". If yes, the optimal path has already been found and the algorithm goes to step 35. If not, a new request from current network node to destination network node is launched (step 19). This request uses the same algorithm as the one of the main request and therefore the present method uses recursivity. The algorithm checks the results of the request (step 21). If no path is found, the current network node is set as "checked" and the algorithm goes back to step 11. If a path is found, the path and associated status information as described above are saved in the open list, current network node is set as "checked" (step 23) and the algorithm goes back to step 11.

### - an exploration routine 3:

At step 15, if the current node is not a regen node or if the current node is the source node, a loop is launched to explore all the potential subsequent neighbor network nodes of the current node (step 25). In the loop, for each potential subsequent neighbor network node, the availability of the link between the current network node and the potential subsequent neighbor network node is checked (step 27). If the link is available, the physical feasibility is checked by evaluating the QoT function of the path between the source network node and the potential subsequent neighbor network node (step 29). If the QoT function value is admissible, the potential subsequent neighbor network node and corresponding path is added to the open list with associated status information as described above. Once all the potential subsequent neighbors network nodes have been explored, the algorithm goes back to step 11.

### - a termination routine 6:

At step 11, if the list is empty, the algorithm ends and a message "no feasible path for the request" is returned (step 33). At step 13, if the current node is the destination node, the program ends (step 35). At step 17, if the the current node is set as "checked", the program ends (step 35).

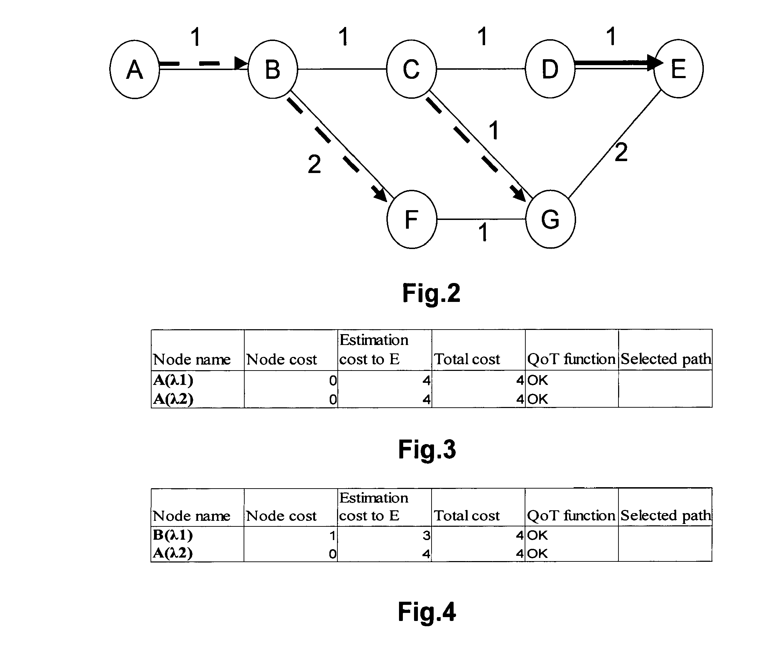

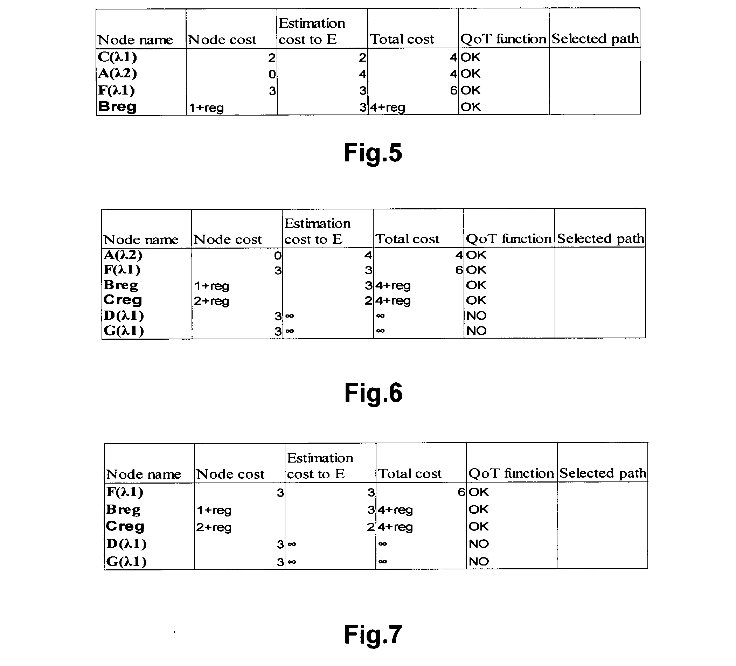

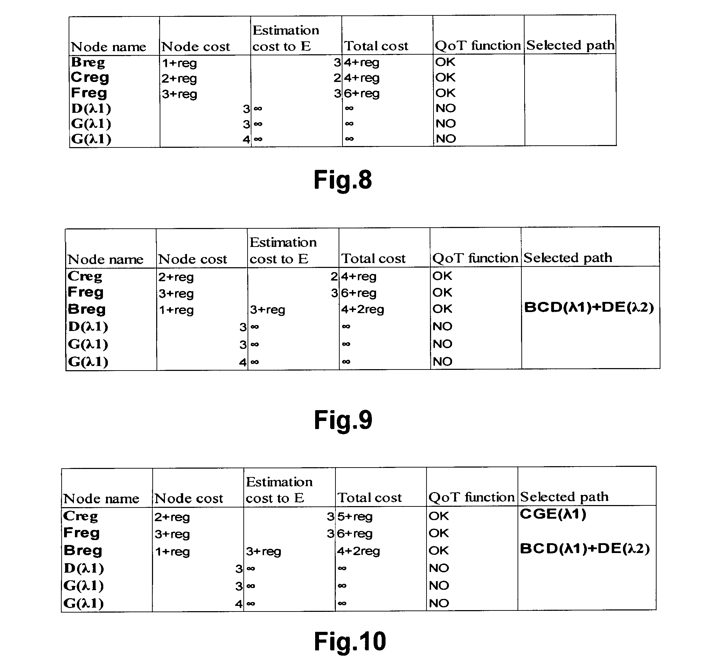

To better understand the present invention, the different steps of the method will be shown based on the optical network illustrated on FIG.2. In this network, two wavelengths exists λ1 and λ2. The arrows on the diagram indicate wavelengths already occupied meaning not available to present request along the path, continuous arrow corresponds to λ1 and dotted arrows correspond to wavelength λ2. The numbers associated with each link represent a value representative of the transportation cost between two nodes (although Fig.2 is not a layer graph representation, it is equivalent thereto. The equivalent layer graphs can be derived from Fig.2 without difficulty). In this example, the cost is the same for both wavelengths but different costs can be set for different wavelengths. In the present example a request from node A to E is launched. The search starts from source network node A and will stop when destination network node E is chosen in the open list.
Figures 3 to 10 represent the evolution of the open list at each step of the search. The open list comprises six columns. The first one comprises the node names with corresponding wavelength of the optical signal. The second one represents a value representative of the transportation cost of the path from the source network node A to the current network node. The third one is the estimation of the cost from the current network node to destination network node E without taking into account signal quality or network availability. If the QoT condition is not satisfied at the current network node, a flag value is added, preferentially the value is infinite. The fourth one represents the total estimated cost and is the sum of the two previous columns. The fifth one indicates a value corresponding to physical feasibility. In this case, it is a value showing that the QoT condition is respected and therefore if no regeneration is needed. The last one is used only for regen nodes and indicates the paths possibly found from the current regen node to destination network node.
The initialization step puts A in the open list in a status that the optical signal is regenerated (Areg), therefore allowing the selection of the different wavelengths along the different possible paths. Node A is selected for two possible wavelengths A(λ1) and A(λ2) (Fig.3).
The exploration leads now to node B. The wavelength λ2 between A and B is already occupied and not available (represented by a dotted arrow) so that the only remaining possibility is the wavelength λ1 and the open list becomes as shown on Fig.4.
B(λ1) is then selected and the different paths from B are explored. The potential subsequent neighbor nodes are nodes C and F (A was the previous node and is ignored). Another possibility is a regeneration in B indicated by Breg as an optical signal regeneration in B. Thus, we obtain the open list represented on Fig.5.
Node C(λ1) appears to have the lowest total cost and is therefore selected and put at the first position in the open list. Exploration from node C leads to nodes D and G (regeneration in node C is also possible) but the QoT condition is not respected either at node D or at node G. The corresponding estimated cost to destination node are then set to infinite (fig. 6).
Node A with wavelength λ2 becomes the node with the lowest total cost but the connection with B on this wavelength is blocked and the node A(λ2) is dismissed from the open list (fig. 7). Node F(λ1) is then selected, the exploration leads to the addition of another node G(λ1) with a different path but the QoT condition along the path between the source network node A and G is not valid. Freg is also added to the list (fig. 8).
The node with the lowest total cost becomes Breg which is therefore selected. As a regen node is selected, a new request from B to E, using the same algorithm as the main request from A to E, is launched. The result of the request gives a path BCD with wavelength λ1, a wavelength conversion in D and DE with wavelength λ2. The path is added in the last column. The cost of a conversion is equivalent to a regeneration cost. The open list becomes as illustrated on fig.9.
Creg is then selected. As for Breg, a new request from C is launched and leads to the path CGE on the wavelength λ1 (fig.10).
The research stops because Creg has been set as "checked" and is the node with the lowest total cost. The optimal path is then ABC on wavelength λ1, a regeneration in C and CGE on wavelength λ1. The associated cost is five plus a regeneration cost. The regeneration capability of a node can be limited or non-existent. In the present example, if regeneration would not have been available at node C, Freg and Breg are still in the open list and the regeneration could have done at node F or node B.
It has also to be noticed that additional constraints can be imposed to the method to match with the user requirements. For example, a maximum level of recursivity can be required.

Thus, the present invention by estimating for each explored node the lowest possible cost to the destination node and by selecting, at each step, the node with the lowest value representative of the total transportation cost allows to save computational time while ensuring to find the optimal feasible path. This also ensure the minimization of blocked demands as well as the number of regenerators in the network.

## Claims

1. Method for routing an optical signal originated from a source network node in an optical communication network from a current network node to a subsequent network node in order to reach a destination network node comprising:
- selecting at least one potential subsequent neighbor network node and corresponding path connected to the current network node (25),
- determining available wavelengths along said path (27),
- determining, for available wavelengths along said path, parameter values representative of the transportation cost between the current network node and the selected potential subsequent neighbor network node,
- adding said selected potential subsequent neighbor network node, corresponding path and associated parameter values representative of the transportation cost between the current network node and the selected potential subsequent neighbor network node to a list of explored potential paths (31),
wherein it further comprises
- checking the physical feasibility of said path and in case of physical feasibility (29),
- selecting the potential subsequent neighbor network node with the lowest parameter value representative of the transportation cost between the source network node and the selected potential subsequent neighbor network node as the subsequent current node.

2. Method for routing an optical signal originated from a source network node in an optical communication network from a current network node to a subsequent network node in order to reach a destination network node in accordance with claim 1 wherein it further comprises steps of:
- determining an estimated parameter value representative of the transportation cost from said potential subsequent neighbor network node to the destination node,
- estimating a total parameter value representative of a total transportation cost, from the source node to the destination node, by adding on one hand the parameter value representative of the transportation cost between the source network node and the selected potential subsequent neighbor network node and on the other hand the estimated parameter value representative of the transportation cost from said potential subsequent neighbor network node to the destination node and,
- selecting the potential subsequent neighbor network node with the lowest total parameter value as the subsequent current node (11).

3. Method for routing an optical signal originated from a source network node in an optical communication network from a current network node to a subsequent network node in order to reach a destination network node in accordance with claim 1 or 2 wherein checking the physical feasibility of said paths comprises evaluation of a QoT function (29).

4. Method for routing an optical signal originated from a source network node in an optical communication network from a current network node to a subsequent network node in order to reach a destination network node in accordance with claim 3, wherein it further comprises memorizing in the list, for explored potential paths,
- a path definition comprising the different nodes along the path,
- associated parameter values representative of the transportation cost of the path,
- associated estimated parameter values representative of the transportation cost from said potential subsequent neighbor network node to the destination node,
- associated total estimated parameter value representative of the total transportation cost, from the source node to the destination node and,
- a value representative of the QoT function.

5. Method for routing an optical signal originated from a source network node in an optical communication network from a current network node to a subsequent network node in order to reach a destination network node in accordance with any of the previous claims,
wherein a flag value of the parameter values representative of the transportation cost between the current network node and the selected potential subsequent neighbor network node is added to a path in case of non physical feasibility, the flag value being preferentially an infinite value.

6. Method for routing an optical signal originated from a source network node in an optical communication network from a current network node to a subsequent network node in order to reach a destination network node in accordance with any of the previous claims,
wherein selecting at least one potential subsequent neighbor network node and corresponding path connected to the current network node further comprises paths incorporating regeneration of the signal.

7. Method for routing an optical signal originated from a source network node in an optical communication network from a current network node to a subsequent network node in order to reach a destination network node in accordance with any of the previous claims,
wherein selecting at least one potential subsequent neighbor network node and corresponding path connected to the current network node further comprises paths incorporating wavelength conversion of the signal.

8. Method for routing an optical signal originated from a source network node in an optical communication network from a current network node to a subsequent network node in order to reach a destination network node in accordance with any of the previous claims,
wherein the estimated parameter value representative of the transportation cost from said potential subsequent neighbor network node to the destination node is the cost of the shortest path from said potential subsequent neighbor network node to the destination node without signal regeneration and without wavelength conversion.

9. Method for routing an optical signal originated from a source network node in an optical communication network in order to reach a destination network node wherein it comprises
- receiving a request to send an optical signal from a source network node to a destination network node (7),
- adding the source network node to the list of explored potential paths (9) and,
- iterating the method in accordance with any of the previous claims until destination node is reached or until no feasible path exist.

10. Method for routing an optical signal originated from a source network node in an optical communication network in order to reach a destination network node in accordance with claim 9 wherein the method further comprises routing the optical signal through the selected path corresponding to the lowest total parameter value representative of total transportation cost to the destination node.
